# EUROPÄISCHE PATENTSCHRIFT

(11) **EP 2 098 431 B1**
(45) Veröffentlichungstag und Bekanntmachung des Hinweises auf die Patenterteilung: **06.07.2011**
(21) Anmeldenummer: 09000922.6
(22) Anmeldetag: 23.01.2009
(51) Int. Cl.: B60W 50/08, B60W 30/12, B60W 30/14

(54) **Kraftfahrzeug mit Fahrerassistenzsystemen**
Motor vehicle with driver assistance systems
Véhicule automobile avec des systèmes d'assistance à la conduite

(30) Priorität: 27.02.2008 DE 102008011366
(43) Veröffentlichungstag der Anmeldung: 09.09.2009
(73) Patentinhaber: Audi AG, 85045 Ingolstadt (DE)
(72) Erfinder: Limbacher, Reimund, 85055 Ingolstadt (DE)
(74) Vertreter: Thielmann, Frank

(56) Entgegenhaltungen:
- EP-A- 1 304 251
- WO-A-2004/025323
- WO-A-2005/061263
- DE-A1-102004 051 963
- US-A1- 2006 025 893
- US-A1- 2007 182 529

## Beschreibung

Die Erfindung betrifft ein Kraftfahrzeug umfassend ein oder mehrere Fahrerassistenzsysteme, die manuell zu- und abschaltbar sind.

Der nächstliegende Stand der Technik ist in der DE 10 2004 051 963 A1 zu sehen.

In modernen Fahrzeugen werden zunehmend unterschiedliche Fahrerassistenzsysteme verbaut, die den Fahrer unterstützen sollen. Bekannt ist beispielsweise ein Spurhalteassistenzsystem (LDW-System, LDW=Lane Departure Warning), das das Einhalten der befahrenen Fahrspur unterstützt, ein Spurwechselassistenzsystem, das den Fahrer bei einem beabsichtigten Spurwechsel unterstützt, ein Abstandshaltesystem (ACC-System, ACC=Adaptive Cruise Control), das der automatischen Längsführung des Fahrzeugs dient und ähnliche Systeme. Diesen Systemen ist gemein, dass sie in der Regel nicht automatisch und dauerhaft aktiv sind, sondern vom Fahrer manuell zugeschaltet werden müssen. Hierzu sind entsprechende Bedienelemente vorgesehen, beispielsweise Tasten, die üblicherweise den einzelnen Fahrerassistenzsystemen zugeordnet sind und die der Fahrer zum manuelle Ein- und Ausschalten betätigen muss. Zum Teil sind die Systeme auch so ausgelegt, dass der letzte Betriebszustand, also Ein oder Aus, eingestellt bleibt, auch wenn das Fahrzeug zwischendurch abgestellt und die Zündung ausgeschaltet und nachfolgend erst wieder eingeschaltet wird.

Wenngleich solche Fahrerassistenzsysteme in vielen Verkehrssituationen hilfreich und unterstützend sind, arbeiten die Systeme jedoch nicht situationsselektiv, d. h., die Systeme arbeiten auch dann und geben entsprechende Warninformationen, wenn die Informationsgabe für den Fahrer weniger hilfreich ist und eher als störend empfunden wird. Ist beispielsweise ein Spurwechselassistenzsystem bei einer Autobahnfahrt mit zähfließendem Verkehr und hohem Verkehrsaufkommen aktiviert, so ist die entsprechende Warnlampe, zum Teil verbunden mit einem akustischen Signal, äußerst häufig in Betrieb, um eine Warnung abzugeben, was vom Fahrer in dieser Situation oft als störend empfunden wird. Ein anderes Beispiel ist die Gabe eines Lenkradvibrations-Warnsignals oder ein aktiver Lenkradeingriff eines Spurhalteassistenzsystems, der häufig gegeben wird, wenn das Fahrzeug ebenfalls beispielsweise bei einer Autobahnfahrt häufig die Spur wechselt oder bei einer Landstraßenfahrt der Fahrer versucht, am vorausfahrenden Fahrzeug vorbeizusehen, um einen möglichen Überholvorgang einzuleiten. Infolgedessen werden diese Systeme dann oft vom Fahrer wieder ausgeschaltet. Tritt später wieder eine Verkehrssituation auf, in der das Fahrerassistenzsystem nützlich sein könnte, wird die erneute Zuschaltung häufig vergessen, da der Fahrer mitunter davon ausgeht, dass das Fahrerassistenzsystem noch zugeschaltet ist.

Der Erfindung liegt damit das Problem zugrunde, ein Kraftfahrzeug anzugeben, das den Fahrer in solchen Situationen unterstützt.

Zur Lösung dieses Problems ist bei einem Kraftfahrzeug der eingangs genannten Art erfindungsgemäß vorgesehen, dass mittels eines Steuerungsgeräts eines Fahrerassistenzsystems in Abhängigkeit einer oder mehrerer fahrzeug- und/oder umgebungsbezogener Informationen die momentane Verkehrssituation ermittelbar ist und bei Ermittlung einer Verkehrssituation, in der ein Betrieb eines oder mehrerer der Fahrerassistenzsysteme zweckmäßig ist, wenigstens eine assistenzsystembezogene optische und/oder akustische und/oder haptische Eigenschaltaufforderung zum Einschalten des Fahrerassistenzsystems ausgebbar ist.

Die Erfindung schlägt vor, kontinuierlich anhand einer oder mehrerer fahrzeugseitig vorliegende Informationen die aktuelle Verkehrssituation zu bestimmen und zu analysieren, ob in der gegebenen Situation eine gewisse Wahrscheinlichkeit dafür besteht, dass es ausgehend von der momentanen Verkehrssituation in näherer Zukunft zu Situationen kommen kann, die die Gabe eines Warnsignals oder eines Eingriffs eines momentan ausgeschalteten Fahrerassistenzsystems erfordern würden. Ist ausgehend von der analysierten Ist-Situation, die, worauf nachfolgend noch eingegangen wird, zweckmäßigerweise aus einer Vielzahl unterschiedlicher fahrzeugseitig vorhandener früherer und aktueller Informationen bewertet wird, eine hinreichende Wahrscheinlichkeit gegeben, dass es beispielsweise zu einem unbeabsichtigten Spurverlassen oder einer unbeabsichtigten Kollision mit anderen Fahrzeugen im toten Winkel kommen kann, wird vorteilhafterweise dem Fahrer eine Einschaltaufforderung gegeben, die ihn daran erinnert, ein entsprechendes Fahrerassistenzsystem zuzuschalten. Über diese Einschaltaufforderung wird der Fahrer daran erinnert, dass das entsprechende Fahrerassistenzsystem ausgeschaltet ist, er kann dann selbst entscheiden, ob er der Einschaltaufforderung nachkommt oder nicht. Die Einschaltaufforderung, die optisch, akustisch und/oder haptischer Natur sein kann, wird assistenzsystembezogen gegeben, d. h., der Fahrer erkennt anhand der Einschaltaufforderung sofort, welches Fahrerassistenzsystem er zweckmäßigerweise zuschalten sollte.

Hierüber kann die Sicherheit und der Fahrkomfort beachtlich verbessert werden. Die Sicherheit deshalb, als die situationsbezogen zweckmäßigerweise eingeschalteten Fahrerassistenzsysteme tatsächlich meistens auch dann zugeschaltet sind, wenn es die Situation erfordert, d. h., sie können ihren Überwachungs- und Wambetrieb tatsächlich auch dann zur Verfügung stellen, wenn dies situationsbedingt auch erforderlich ist. Der Fahrkomfort wird verbessert, da der Fahrer hierüber aktiv unterstützt wird und auf entsprechende Handlungen zur Verbesserung der eigenen Sicherheit aktiv hingewiesen wird. Dies kann darüber hinaus besonders vorteilhaft zur Vermeidung von Unfällen führen, nachdem Situationen erfasst und vor ihnen gewarnt werden kann, in denen ansonsten keine Warnung erfolgen würde. Schließlich kann auch die Nutzungszeit der Fahrerassistenzsysteme durch situationsgerechtes Zuschalten erhöht werden.

Wie beschrieben wird die momentane Verkehrssituation und abgeleitet daraus eine Wahrscheinlichkeit dafür bestimmt, dass entweder die gegebene oder sich zukünftig anbahnende Verkehrssituationen dergestalt sind, dass eine Warnsignalgabe über ein Fahrerassistenzsystem gerechtfertigt wäre und erfolgen würde. Hierzu wird auf fahrzeug- und/oder umgebungsbezogene Informationen gesetzt, die allesamt fahrzeugseitig vorliegen, wobei sowohl aktuelle als auch ältere Informationen hierbei berücksichtigt werden. Je mehr Informationen unterschiedlicher Art verarbeitet werden, umso genauer ist eine Situationsbewertung und damit eine Wahrscheinlichkeitsermittlung möglich.

Als eine fahrzeugbezogene Information kann dabei eine Geschwindigkeitsinformation, insbesondere eine über eine vorbestimmte Zeitdauer erfasste Geschwindigkeitsinformation, also ein Geschwindigkeitsprofil, eine Fahrtdauerinformation, eine aus dem Lenkbetrieb abgeleitete und die zurückgelegt Fahrtstrecke beschreibende Information und/oder eine das Beschleunigungs- und/oder Bremsverhalten beschreibende Information verarbeitet werden. Fahrzeugbezogene Informationen sind also primär Informationen, die die Fahrtstrecke oder den Fahrzeugbetrieb beschreiben. Diese Aufzählung ist nur beispielhaft und keinesfalls abschließend, es ist selbstverständlich möglich, auch andere fahrzeugbezogene Informationen zu erfassen und zu verarbeiten, je nachdem, welche Informationen für die Wahrscheinlichkeitsbewertung bezogen auf ein bestimmtes Fahrerassistenzsystem benötigt werden. Selbstverständlich werden zur Bewertung einer Verkehrssituation und daraus folgend einer Wahrscheinlichkeit nicht alle möglichen Informationen benötigt, sondern nur solche, die assistenzsystembezogen sind.

Eine umgebungsbezogene Information kann beispielsweise eine Information sein, die von wenigstens einem trotz gegebenenfalls ausgeschaltetem Fahrerassistenzsystem aktiven Sensor eines der Fahrerassistenzsysteme geliefert wird. Wenngleich das oder die Fahrerassistenzsysteme nicht eingeschaltet sind, also ihren Überwachungs- und Wambetrieb nicht wahrnehmen, so ist dennoch die jeweilige assistenzsystembezogene Sensorik aktiv, d. h., die assistenzsystembezogenen Sensoren liefern trotzdem entsprechende Erfassungssignale. Die Sensorik eines Spurwechselassistenzsystems erfasst also trotz ausgeschaltetem Assistenzsystem im toten Winkel befindliche Fahrzeuge, wie auch die Radarsensoren eines ACC-Systems trotz ausgeschaltetem ACC-System vorausfahrende Fahrzeuge erfassen und Signale liefern. Diese Signale können nun im Rahmen der Situations- und Wahrscheinlichkeitsermittlung vorteilhaft als umgebungsbezogene Informationen verwendet werden. Beispielsweise kann hierüber im Zusammenhang mit der Bestimmung der Verkehrssituation und der Wahrscheinlichkeit einer Warnsignalgabe über ein Spurwechselassistenzsystem das Vorhandensein von in der gleichen Richtung fahrenden Fahrzeugen auf der oder den Nachbarspuren erfasst werden. Bezogen auf ein ACC-System kann über entsprechende Sensorsignale das Vorhandensein von ähnlich schnell fahrenden Fahrzeugen vor dem eigenen Fahrzeug ermittelt werden etc. Auch diese Aufzählung ist keinesfalls abschließend sondern nur beispielhaft.

Die Einschaltaufforderung wird zweckmäßigerweise über systemeigene Anzeigemittel gegeben, d. h., dass der Fahrer beispielsweise über die Leuchtanzeigen zum Einschalten aufgefordert wird, über die ansonsten auch z. B. die Warnsignalgabe erfolgt. Denkbar wäre es dabei, die Leuchten beispielsweise in einer anderen Folge blinken zu lassen oder die Leuchtfarbe zu wechseln. Selbstverständlich wäre es auch denkbar, über ein entsprechendes Anzeigedisplay, sei es direkt im Kombiinstrument oder seitlich dazu am Armaturenbrett, eine entsprechende optische Aufforderung zu geben, die ebenfalls blinken kann oder über einen entsprechenden akustischen Ton unterstützt ist.

Die Verarbeitung der Informationen erfolgt zweckmäßigerweise im jeweiligen Steuergerät eines jeweiligen Fahrerassistenzsystems selbst. Denn wie beschrieben, hat jedes Fahrerassistenzsystem separate Voraussetzungen hinsichtlich seines Betriebs und insbesondere hinsichtlich der Ermittlung, ob z. B. ein Warnsignal zu geben wäre oder ein Systemeingriff z. B. zur Längsführungsregelung erforderlich wäre, oder nicht, weshalb zur Bewertung der systembezogenen Verkehrssituationen und der systembezogenen Wahrscheinlichkeit entsprechende systemspezifische Informationen benötigt werden.

Neben dem Kraftfahrzeug betrifft die Erfindung ferner ein Verfahren zum Betrieb eines Kraftfahrzeugs umfassend mehrere manuell zu- und abschaltbare Fahrerassistenzsysteme, bei welchem Verfahren kontinuierlich anhand einer oder mehrerer fahrzeug- und/oder umgebungsbezogener Informationen, die ein Maß für eine momentane Verkehrssituation darstellen, die momentane Verkehrssituation bestimmt und in Abhängigkeit des Bestimmungsergebnisses ermittelt wird, ob der Betrieb eines oder mehrerer der Fahrerassistenzsysteme zweckmäßig ist, wobei bei Vorliegen einer Situation, in der ein Betrieb zweckmäßig ist, wenigstens eine assistenzbezogene optische und/oder akustische und/oder haptische Einschaltaufforderung zum Einschalten des Fahrerassistenzsystems ausgegeben wird. Weitere zweckmäßige Ausgestaltungen des erfindungsgemäßen Verfahrens sind den Unteransprüchen zu entnehmen.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Kraftfahr- zeugs, und
- Fig. 2: eine Prinzipdarstellung zur Erläuterung der Gabe des Eingabe- aufforderungssignals.

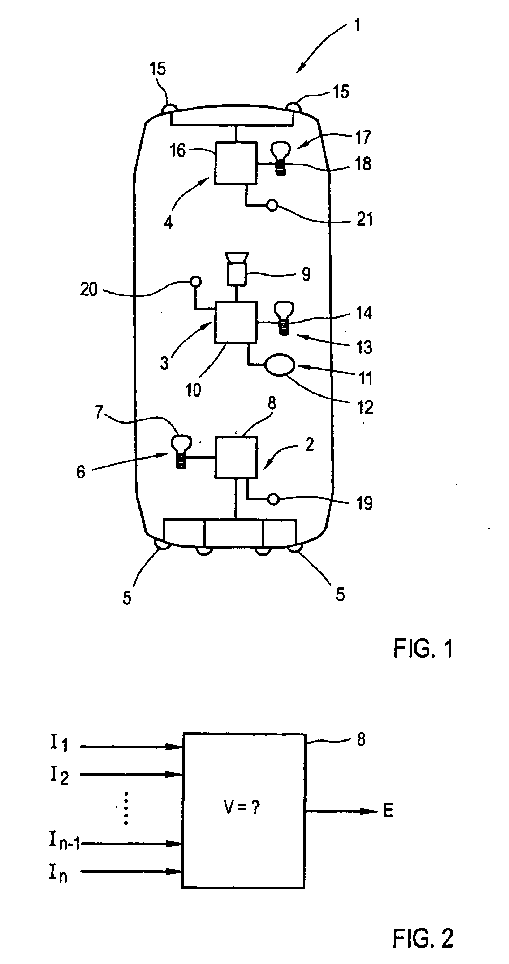

Fig. 1 zeigt ein erfindungsgemäßes Kraftfahrzeug 1, umfassend im gezeigten Beispiel drei Fahrerassistenzsysteme 2, 3, 4, wobei es sich bei dem Fahrerassistenzsystem 2 um ein Spurwechselassistenzsystem, beim Fahrerassistenzsystem 3 um ein Spurhalteassistenzsystem und beim Fahrerassistenzsystem 4 um ein Längsführungssystem (ACC-System) handelt.

Das Fahrerassistenzsystem 2 umfasst im gezeigten Beispiel mehrere Sensoren 5, die zur Erfassung des Fahrzeugrückraums dienen, und über die bestimmt werden kann, ob sich Fahrzeuge von hinten nähern. Ist dies der Fall, und liegt eine Spurwechselabsicht vor, kann über eine geeignete Warneinrichtung 6, hier eine Anzeigeleuchte 7, bei betriebenem Fahrerassistenzsystem 2 ein Warnsignal in Form eines Blinksignals ausgegeben werden. Der Betrieb wird über das Steuergerät 8 gesteuert.

Das Fahrerassistenzsystem 3 dient dazu, dass die befahrene Fahrspur eingehalten wird. Zu diesem Zweck verfügt das Fahrerassistenzsystem 3 über eine Kamera 9, die das Fahrzeugvorfeld aufnimmt. Eine Steuerungseinrichtung 10 des Systems ermittelt durch geeignete Analysealgorithmen die Fahrzeugberandungen der befahrenen Fahrspur und die Fahrzeug-Ist-Position respektive den weiteren Fahrweg, um zu ermitteln, ob sich das Fahrzeug in Kürze der Fahrbahnberandung nähert oder nicht. Ist eine Annäherung der Fall, wird über ein geeignetes Warnmittel 11, üblicherweise ein Vibrationsalarm im Lenkrad 12, eine Warnung an den Fahrer ausgegeben. Vorgesehen ist üblicherweise ferner ein weiteres Anzeigemittel 13 in Form einer Anzeigeleuchte 14, über die der Funktionsstatus des Systems, also ob es ein- oder ausgeschaltet ist, angezeigt wird, über das aber auch gegebenenfalls ein Warnsignal gegeben werden kann.

Das Fahrerassistenzsystem 4 umfasst zwei frontseitige Sensoren 15, üblicherweise Radarsensoren, die den Abstand zu einem vorausfahrenden Fahrzeug ermitteln. Die Steuerungseinrichtung 16 ermittelt daraus entsprechende Steuerinformationen, aufgrund welcher aktiv in die Längsführung des Fahrzeugs eingegriffen wird. Der Funktionsstatus, ob also das System ein- oder ausgeschaltet ist, wird auch hier über ein geeignetes Anzeigemittel 17, bevorzugt auch hier in Form einer Anzeigeleuchte 18, angezeigt.

Allen Fahrerassistenzsystemen 2, 3, 4 ist gemein, dass sie über ein entsprechendes Betätigungselement 19, 20, 21, beispielsweise in Form einer Taste, vom Fahrer manuelle aktiv ein- und ausgeschaltet werden müssen. Ist ein Fahrerassistenzsystem ausgeschaltet, kann trotz allem eine Situation gegeben sein, in der eine Unterstützung des Fahrers über das Fahrerassistenzsystem zweckmäßig wäre, weshalb dem Fahrer bei Erfassen einer solchen Situation über ein entsprechendes Anzeigemittel eine Einschaltaufforderung gegeben wird. Um dies zu bestimmen ist, siehe Fig. 2, die Verarbeitung verschiedener fahrzeug- und/oder umgebungsbezogener Informationen vorgesehen, um die momentane Verkehrssituation zu ermitteln und daraus abzuleiten, ob es situationsbedingt zweckmäßig wäre, ein Fahrerassistenzsystem einzuschalten oder nicht. Ist das Zuschalten zweckmäßig, wird eine Eingabeaufforderung ausgegeben. Hierzu erhält jedes der systemeigenen Steuergeräte 8, 10, 16 verschiedene fahrzeug- und/oder umgebungsbezogener Informationen, die in Fig. 2 mit I₁, I₂,... Iₙ₋₁, Iₙ dargestellt sind. Es sei angenommen, dass es sich bei dem in Fig. 2 gezeigten Steuergerät 8 des Fahrerassistenzsystems 2, also des Spurwechselassistenz-Systems, handelt. Als Informationen, im Folgenden allgemein 1 genannt, wird beispielsweise kontinuierlich die Ist-Geschwindigkeit erfasst, wobei die Steuerungseinrichtung 8 die Geschwindigkeit über einen gewissen Zeitraum aufzeichnet, um daraus ein Geschwindigkeitsprofil zu erstellen. Das Geschwindigkeitssignal wird über eine geeignete Erfassungseinrichtung geliefert, die Übertragung erfolgt vorzugsweise über einen Kraftfahrzeugbus, vorzugsweise den CAN-Bus, an dem bekannterweise sämtliche Steuereinrichtungen hängen. Weiterhin werden als Information 1 die kontinuierlich aufgenommenen Signale der Sensoren 5 gegeben, die auch dann aufgenommen werden, wenn das Fahrerassistenzsystem 2 ausgeschaltet ist. Denn die Sensoren arbeiten ständig, um sicherzustellen, dass entsprechende Sensorsignale unmittelbar dann vorliegen, wenn das System zugeschaltet wird und gegebenenfalls sofort gewarnt werden kann und nicht erst eine gewisse Zeit verstreichen muss, bis hinreichend viele Sensordaten vorliegen. Dies gilt im Übrigen für alle zu beschreibenden Fahrerassistenzsysteme. Im Falle des Fahrerassistenzsystems 2 kann anhand dieser aufgenommenen Signale bzw. Informationen I der Sensoren 5 ermittelt werden, ob auf der oder den Nachbarspuren in gleicher Richtung fahrende Fahrzeuge vorhanden sind. Ferner kann als Information I das vergangene Spurwechselverhalten verwendet werden, also Informationen über die Blinkbetätigung oder Lenkbetätigungen, die darauf schließen lassen, dass der Fahrer zuletzt öfter die Spur gewechselt hat. Die Aufzählung ist nicht abschließend, selbstverständlich können auch noch weitere Informationen I der Steuerungseinrichtung 8 gegeben werden.

Die Steuerungseinrichtung 8 bewertet nun anhand der gegebenen Informationen die Verkehrssituation V und leitet daraus kontinuierlich eine Wahrscheinlichkeit für die Möglichkeit einer unbeabsichtigten Kollision mit anderen Fahrzeugen im toten Winkel ab. Ist aufgrund der gegebenen Informationen eine hinreichende Wahrscheinlichkeit gegeben, dass es grundsätzlich zu solchen Kollisionen kommen kann, so wird seitens der Steuerungseinrichtung 8 ein Signal ausgegeben, um gezeigten Beispiel über die Anzeigeleuchte 7, die sich beispielsweise im fahrerseitigen Rückspiegel befindet, eine Eingabeaufforderung E in optischer Form zu geben. Der Fahrer erkennt anhand dieser Eingabeaufforderung, die beispielsweise durch mehrmaliges, z. B. fünf-maliges langsames Blinken der Anzeigeleuchte 7 im Außenspiegel gegeben wird, dass es zweckmäßig wäre, in der gegebenen Situation das Fahrerassistenzsystem 2 zuzuschalten, was er daraufhin durch Betätigen des Betätigungselements 19 vornehmen kann. Ergibt sich aus der Verkehrssituationsbestimmung, dass das Zuschalten des Fahrerassistenzsystems 2 nicht zweckmäßig ist bzw. dem Fahrer keinen echten Vorteil bringt, wird keine Eingabeaufforderung E ausgegeben.

Entsprechende Prüfungsmöglichkeiten sind auch hinsichtlich der Fahrerassistenzsysteme 3 und 4 gegeben. Im Falle des Fahrerassistenzsystems 3 werden als Informationen I beispielsweise die Fahrtdauer, die Tageszeit, das Geschwindigkeitsprofil, erstellt aus laufend aufgenommenen Ist-Geschwindigkeitswerten, und die Lenk- und Brems- bzw. Gaspedalbetätigung zur Ermittlung der Kurvigkeit der Strecke aufgenommen und zur Bestimmung der Verkehrssituation V verarbeitet. Anhand dieser wird dann die Wahrscheinlichkeit oder ein Wahrscheinlichkeitswert für die Möglichkeit eines unbeabsichtigten Spurverlassens der über die Kamera 9, die auch bei ausgeschaltetem Assistenzsystem 3 Bilder liefert, erfassten Fahrspur bestimmt. Ergibt sich eine erhöhte Wahrscheinlichkeit bzw. ein Wahrscheinlichkeitswert, der über einem gesetzten Schwellwert liegt, so wird die Einschaltaufforderung über die Steuerungseinrichtung 10 gegeben, die dann beispielsweise über die Anzeigeleuchte 14, die dann mehrfach blinken kann, ausgegeben wird. Daraufhin kann der Fahrer das Fahrerassistenzsystem 3 zuschalten.

Im Falle des Fahrerassistenzsystems 4 werden als Informationen beispielsweise Geschwindigkeitsinformationen und daraus erstellt ein Geschwindigkeitsprofil, Sensorinformationen, geliefert über die stets arbeitenden Sensoren 15 zur Ermittlung des Vorhandenseins von ähnlich schnell fahrenden Fahrzeugen vor dem Fahrzeug, Informationen über die Lenkbetätigung sowie Brems- und Beschleunigungsinformationen, also Informationen über die Pedalbetätigung, um hieraus gegebenenfalls den Streckenverlauf und etwaige Überholvorgänge zu ermitteln, verarbeitet. Die Steuerungseinrichtung 16 ermittelt auch hier die Verkehrssituation, d. h, es wird ein Wertemaß bestimmt, über das die Verkehrssituation bezogen auf das Fahrerassistenzsystem bewertet werden kann, um daraufhin kontinuierlich das Nutzungspotential des Fahrerassistenzsystems 4 zu bestimmen. Bei diesem Fahrerassistenzsystem 4 wird keine Wahrscheinlichkeit für das Eintreten eines bestimmten Umstands wie bei den Fahrerassistenzsystemen 2 und 3 ermittelt, sondern es wird ermittelt, ob im Hinblick auf den tatsächlichen Fahrbetrieb eine Verbesserung durch eine Nutzung des Fahrerassistenzsystems 4 möglich ist. Ist dies der Fall, so wird auch hier eine Eingabeaufforderung E beispielsweise über die Anzeigeleuchte 17 ausgegeben.

## Patentansprüche

1. Kraftfahrzeug umfassend ein oder mehrere Fahrerassistenzsysteme, die manuell zu- und abschaltbar sind,
**dadurch gekennzeichnet,**
**dass** mittels eines Steuerungsgeräts eines Fahrerassistenzsystems in Abhängigkeit einer oder mehrerer fahrzeugseitig vorliegender fahrzeug- und/oder umgebungsbezogener Informationen, wobei sowohl aktuelle als auch ältere Informationen berücksichtigt werden, die momentane Verkehrssituation ermittelbar ist und bei Ermittlung einer Verkehrssituation, in der ein Betrieb eines oder mehrerer ausgeschalteter Fahrerassistenzsysteme zweckmäßig ist, wenigstens eine assistenzsystembezogene optische und/oder akustische und/oder haptische Einschaltaufforderung zum Einschalten des ausgeschalteten Fahrerassistenzsystems ausgebbar ist.

2. Kraftfahrzeug nach Anspruch 1,
**dadurch gekennzeichnet,**
**dass** eine fahrzeugbezogene Information (I₁, I₂, ..., Iₙ₋₁, Iₙ) eine Geschwindigkeitsinformation, insbesondere eine über eine vorbestimmte Zeitdauer erfasste Geschwindigkeitsinformation, eine Fahrtdauerinformation, eine aus dem Lenkbetrieb abgeleitete und die Fahrtsrecke beschreibende Information, und/oder eine das Beschleunigungs- und/oder Bremsverhalten beschreibende Information ist.

3. Kraftfahrzeug nach Anspruch 1 oder 2,
**dadurch gekennzeichnet,**
**dass** eine umgebungsbezogene Information (I₁, I₂, ..., Iₙ₋₁, Iₙ) eine Information wenigstens eines trotz gegebenenfalls ausgeschaltetem Fahrerassistenzsystems (2, 3, 4) aktiven Sensors (5, 9, 15) eines der Fahrerassistenzsysteme (2, 3, 4) ist.

4. Kraftfahrzeug nach einem der vorangehenden Ansprüche,
**dadurch gekennzeichnet,**
**dass** eine optische Einschaltaufforderung (E) durch ein- oder mehrmaliges, gegebenenfalls in der Farbe verglichen mit einem Warnsignal veränderten, Blinken einer systemeigenen Anzeigeleuchte (7, 14, 18) gebbar ist.

5. Kraftfahrzeug nach einem der vorangehenden Ansprüche
**dadurch gekennzeichnet,**
**dass** die Verarbeitung der Informationen im jeweiligen Steuerungsgerät (8, 10, 16) eines jeweiligen Fahrerassistenzsystems erfolgt.

6. Verfahren zum Betrieb eines Kraftfahrzeugs umfassend mehrere manuell zu- und abschaltbare Fahrerassistenzsysteme, bei dem kontinuierlich anhand einer oder mehrerer fahrzeugseitig vorliegender fahrzeug- und/oder umgebungsbezogener Informationen, wobei sowohl aktuelle als auch ältere Informationen berücksichtigt werden, die ein Maß für eine momentane Verkehrssituation darstellen, die momentane Verkehrssituation bestimmt und in Abhängigkeit des Bestimmungsergebnisses ermittelt wird, ob ein Betrieb eines oder mehrerer ausgeschalteter Fahrerassistenzsysteme zweckmäßig ist, wobei bei Vorliegen einer Situation, in der ein Betrieb zweckmäßig ist, wenigstens eine assistenzsystembezogene optische und/oder akustische und/oder haptische Einschaltaufforderung zum Einschalten des ausgeschalteten Fahrerassistenzsystems ausgegeben wird.

7. Verfahren nach Anspruch 6
**dadurch gekennzeichnet,**
**dass** als eine fahrzeugbezogene Information eine Geschwindigkeitsinformation, insbesondere eine über eine vorbestimmte Zeitdauer erfasste Geschwindigkeitsinformation, eine Fahrtdauerinformation, eine aus dem Lenkbetrieb abgeleitete und die Fahrtsrecke beschreibende Information, und/oder eine das Beschleunigungs- und/oder Bremsverhalten beschreibende Information verarbeitet wird.

8. Verfahren nach Anspruch 6 oder 7,
**dadurch gekennzeichnet,**
**dass** als eine umgebungsbezogene Information eine Information wenigstens eines trotz gegebenenfalls ausgeschaltetem Fahrerassistenzsystems aktiven Sensors eines der Fahrerassistenzsysteme verarbeitet wird.

9. Verfahren nach einem der Ansprüche 6 bis 8,
**dadurch gekennzeichnet,**
**dass** eine optische Einschaltaufforderung durch ein- oder mehrmaliges Blinken einer systemeigenen Anzeigeleuchte gegeben wird.

## Claims

1. Motor vehicle comprising one or more driver assistance systems which can be activated and deactivated manually,
**characterized**
**in that** the instantaneous traffic situation can be determined by means of a control device of a driver assistance system as a function of one or more vehicle-related and/or surroundings-related information items which are present at the vehicle end, wherein both current information items and relatively old information items are taken into account, and when a traffic situation in which operation of one or more switched-off driver assistance systems is expedient is determined, at least one assistance-system-related visual and/or acoustic and/or haptic switch-on request to switch on the switched-off driver assistance system can be output.

2. Motor vehicle according to Claim 1,
**characterized**
**in that** a vehicle-related information item (I₁, I₂, ... , Iₙ₋₁, Iₙ) is a velocity information item, in particular a velocity information item which is acquired over a predetermined time period, a travel duration information item, an information item which is derived from the steering operation and describes the route, and/or an information item which describes the acceleration behaviour and/or braking behaviour.

3. Motor vehicle according to Claim 1 or 2,
**characterized**
**in that** a surroundings-related information item (I₁, I₂, ..., Iₙ₋₁, Iₙ) is an information item of at least one sensor (5, 9, 15), active despite a possibly switched-off driver assistance system (2, 3, 4), of one of the driver assistance systems (2, 3, 4).

4. Motor vehicle according to one of the preceding claims,
**characterized**
**in that** a visual switch-on request (E) can be issued by single or repeated flashing, possibly changed in colour in a way comparable with a warning signal, of a system-integral indicator light (7, 14, 18).

5. Motor vehicle according to one of the preceding claims,
**characterized**
**in that** the processing of the information item takes place in the respective control device (8, 10, 16) of a respective driver assistance system.

6. Method for operating a motor vehicle, comprising a plurality of driver assistance systems which can be activated and deactivated manually, in which method the instantaneous traffic situation is determined continuously on the basis of one or more vehicle-related and/or surroundings-related information items which are present at the vehicle end, wherein both current information items and relatively old information items which constitute a measure of an instantaneous traffic situation are taken into account, and as a function of the determination result it is detected whether operation of one or more switched-off driver assistance systems is expedient, wherein given the presence of a situation in which operation is expedient at least one assistance-system-related visual and/or acoustic and/or haptic switch-on request to switch on the switched-off driver assistance system is output.

7. Method according to Claim 6,
**characterized**
**in that** a velocity information item, in particular a velocity information item which is acquired over a predetermined time period, a travel duration information item, an information item which is derived from the steering operation and describes the route, and/or an information item which describes the acceleration behaviour and/or braking behaviour are/is processed as a vehicle-related information item.

8. Method according to Claim 6 or 7,
**characterized**
**in that** an information item of at least one sensor, active despite a possibly switched-off driver assistance system, of one of the driver assistance systems is processed as a surroundings-related information item.

9. Method according to one of Claims 6 to 8,
**characterized**
**in that** a visual switch-on request is issued by single or repeated flashing of a system-integral indicator light.

## Revendications

1. Véhicule automobile comprenant un ou plusieurs systèmes d'assistance au conducteur qui peuvent être mis en circuit ou hors circuit manuellement,
**caractérisé en ce**
**que** la situation de trafic momentanée peut être déterminée au moyen d'un appareil de commande d'un système d'assistance au conducteur en fonction d'une ou plusieurs informations en rapport avec le véhicule et/ou l'environnement présentes au niveau du véhicule, les informations à la fois actuelles et aussi plus anciennes étant prises en compte, et, en cas de détermination d'une situation de trafic dans laquelle une utilisation d'un ou plusieurs systèmes d'assistance au conducteur mis hors circuit est judicieuse, au moins une invitation de mise en circuit visuelle et/ou sonore et/ou tactile en rapport avec le système d'assistance peut être délivrée en vue de la mise en circuit du système d'assistance au conducteur mis hors circuit.

2. Véhicule automobile selon la revendication 1, **caractérisé en ce qu'**une information en rapport avec le véhicule (I₁, I₂, ..., Iₙ₋₁, Iₙ) est une information de vitesse, notamment une information de vitesse acquise sur une période de temps prédéfinie, une information de durée de déplacement, une information dérivée du fonctionnement de la direction et décrivant le trajet parcouru et/ou une information décrivant le comportement d'accélération et/ou de freinage.

3. Véhicule automobile selon la revendication 1 ou 2, **caractérisé en ce qu'**une information en rapport avec l'environnement (I₁, I₂, ..., Iₙ₋₁, Iₙ) est une information d'au moins un capteur (5, 9, 15) de l'un des systèmes d'assistance au conducteur (2, 3, 4) actif malgré le fait que le système d'assistance au conducteur (2, 3, 4) soit le cas échéant hors circuit.

4. Véhicule automobile selon l'une des revendications précédentes, **caractérisé en ce qu'**une invitation de mise en circuit (E) visuelle peut être délivrée par un clignotement unique ou multiple d'un témoin indicateur (7, 14, 18) propre au système, le cas échéant dont la couleur est variable en comparaison d'un signal d'alerte.

5. Véhicule automobile selon l'une des revendications précédentes, **caractérisé en ce que** le traitement des informations s'effectue dans le module de commande (8, 10, 16) respectif d'un système d'assistance au conducteur respectif.

6. Procédé d'utilisation d'un véhicule automobile comprenant un ou plusieurs systèmes d'assistance au conducteur qui peuvent être mis en circuit ou hors circuit manuellement, selon lequel la situation de trafic momentanée est déterminée continuellement au moyen d'une ou plusieurs informations en rapport avec le véhicule et/ou l'environnement présentes au niveau du véhicule, les informations à la fois actuelles et aussi plus anciennes qui représentent une mesure pour une situation de trafic momentanée étant prises en compte, et il est déterminé en fonction du résultat de la détermination si une utilisation d'un ou plusieurs systèmes d'assistance au conducteur mis hors circuit est judicieuse, au moins une invitation de mise en circuit visuelle et/ou sonore et/ou tactile en rapport avec le système d'assistance étant délivrée en vue de la mise en circuit du système d'assistance au conducteur mis hors circuit en présence d'une situation dans laquelle une utilisation est judicieuse.

7. Procédé selon la revendication 6, **caractérisé en ce qu'**une information en rapport avec le véhicule traitée est une information de vitesse, notamment une information de vitesse acquise sur une période de temps prédéfinie, une information de durée de déplacement, une information dérivée du fonctionnement de la direction et décrivant le trajet parcouru et/ou une information décrivant le comportement d'accélération et/ou de freinage.

8. Procédé selon la revendication 6 ou 7, **caractérisé en ce qu'**une information en rapport avec l'environnement traitée est une information d'au moins un capteur de l'un des systèmes d'assistance au conducteur actif malgré le fait que le système d'assistance au conducteur soit le cas échéant hors circuit.

9. Procédé selon l'une des revendications 6 à 8, **caractérisé en ce qu'**une invitation de mise en circuit visuelle est délivrée par un clignotement unique ou multiple d'un témoin indicateur propre au système.
